# EUROPÄISCHE PATENTANMELDUNG

(11) **EP 4 181 497 A1**
(43) Veröffentlichungstag der Anmeldung: **17.05.2023**
(21) Anmeldenummer: 22206872.8
(22) Anmeldetag: 11.11.2022
(51) Int. Cl.: H04N 5/222, H04N 5/272

(54) **VERFAHREN UND SYSTEM ZUR VERARBEITUNG VON VIDEODATEN**

(30) Priorität: 12.11.2021 DE 102021129573
(71) Anmelder: Sumolight GmbH, 12099 Berlin (DE)
(72) Erfinder: Jazbinsek, Sascha, 12099 Berlin (DE)
(74) Vertreter: Bittner, Thomas L.

(57) **Zusammenfassung**

Die Offenbarung betrifft ein Verfahren zur Verarbeitung von Videodaten mittels eines Systems, aufweisend eine Aufnahmevorrichtung (10), die eingerichtet ist, Videodaten zu erzeugen; eine Projektionsfolie (11) mit einer der Aufnahmevorrichtung (10) zugewandten Vorderseite und einer von der Aufnahmevorrichtung (10) abgewandten Rückseite und mehrere Lichtquellen (12); wobei das Verfahren aufweist: Bereitstellen von Hintergrunddaten, welche einen Videohintergrund mit einer ersten Auflösung angeben, und Bestimmen von Bildsignalen aus den Hintergrunddaten derart, dass die Bildsignale den Videohintergrund mit einer zweiten Auflösung angeben, die niedriger als die erste Auflösung ist; Übertragen der Bildsignale zu den Lichtquellen (12) und Bestrahlen der Rückseite der Projektionsfolie (11) mittels der Lichtquellen (12); und Aufnahme von ersten Videodaten mittels der Aufnahmevorrichtung (10), die ein Video der Vorderseite der Projektionsfolie (11) und eines Vordergrundobjekts (V) angeben, das zwischen der Projektionsfolie (11) und der Aufnahmevorrichtung (10) angeordnet ist. Ferner wird ein System zur Verarbeitung von Videodaten bereitgestellt.

## Beschreibung

Die Erfindung betrifft ein Verfahren und ein System zur Verarbeitung von Videodaten.

### Hintergrund

Bei Filmaufnahmen im Studio muss der sichtbare Videohintergrund entweder physisch nachgebaut oder virtuell derart angepasst werden, dass ein nachträgliches Einfügen von Schauspielern oder anderen Vordergrundobjekten in eine virtuelle Umgebung während der Postproduktion ermöglicht ist. Szenen im Studio physisch nachzubauen ist im Allgemeinen teuer, zeitaufwändig und schränkt das Spiel der Schauspieler und die Bewegungsfreiheit des Filmteams stark ein. Zudem sind auf diese Weise spontane Änderungen an der Gestaltung des Sets und an Bewegungsabläufen in den Szenen nur schwer umsetzbar.

Um die genannten Einschränkungen zu minimieren, wurden mehrere bekannte Verfahren etabliert. Bei *Greenscreen*-Verfahren oder *Bluescreen*-Verfahren wird das Studio mit grünem bzw. blauem Spezialgewebe ausgekleidet. Werden vor entsprechenden monochromen Flächen Szenen gedreht, können Schauspieler anschließend ausgeschnitten bzw. freigestellt und in separat erzeugte weiteren Szenen eingefügt werden. Alternativ können die Schauspieler vor Rückprojektionsfolien gefilmt werden, während Hintergrundsequenzen von hinten in hoher Auflösung auf die Rückprojektionsfolien projiziert werden. Die Hintergrundsequenzen in hoher Auflösung können alternativ von hochauflösenden LCD-Monitoren, die nahtlos ineinander übergehen, abgespielt werden (*virtual production*)*.* Produktionen mit hochaufgelöstem Abspielen der Hintergrundsequenzen verursacht jedoch hohe Kosten, insbesondere bei Beschaffung und Installation.

### Zusammenfassung

Aufgabe der Erfindung ist es, ein Verfahren und ein System anzugeben, mit denen Videodaten auf vereinfachte und kostengünstige Weise erzeugt werden können.

Zur Lösung sind ein Verfahren und ein System zur Verarbeitung von Videodaten nach den unabhängigen Ansprüchen 1 und 15 geschaffen. Ausgestaltungen sind Gegenstand abhängiger Unteransprüche.

Nach einem Aspekt ist ein zur Verarbeitung von Videodaten mittels eines Systems geschaffen, aufweisend: eine Aufnahmevorrichtung, die eingerichtet ist, Videodaten zu erzeugen; eine Projektionsfolie mit einer der Aufnahmevorrichtung zugewandten Vorderseite und einer von der Aufnahmevorrichtung abgewandten Rückseite und mehrere Lichtquellen; wobei das Verfahren aufweist: Bereitstellen von Hintergrunddaten, welche einen Videohintergrund mit einer ersten Auflösung angeben, und Bestimmen von Bildsignalen aus den Hintergrunddaten derart, dass die Bildsignale den Videohintergrund mit einer zweiten Auflösung angeben, die niedriger als die erste Auflösung ist; Übertragen der Bildsignale zu den Lichtquellen und Bestrahlen der Rückseite der Projektionsfolie mittels der Lichtquellen; und Aufnahme von ersten Videodaten mittels der Aufnahmevorrichtung, die ein Video der Vorderseite der Projektionsfolie und eines Vordergrundobjekts angeben, das zwischen der Projektionsfolie und der Aufnahmevorrichtung angeordnet ist.

Nach einem weiteren Aspekt ist ein System zur Verarbeitung von Videodaten geschaffen, welches Folgendes aufweist: eine Aufnahmevorrichtung, die eingerichtet ist, Videodaten zu erzeugen; eine Projektionsfolie mit einer der Aufnahmevorrichtung zugewandten Vorderseite und einer von der Aufnahmevorrichtung abgewandten Rückseite und mehrere Lichtquellen, wobei das System eingerichtet ist, das Verfahren nach einem der vorangehenden Ansprüche auszuführen.

Mit dem Verfahren und dem System können auf günstige Weise spezifische Lichtsituationen, welche sich aus der Umgebung der Szenen ergeben, während des Drehs erzeugt werden. Insbesondere müssen Lichtreflexe auf den Vordergrundobjekten nicht gesondert auf aufwändige Weise während der Postproduktion erzeugt werden. Zugleich kann eine visuelle Rückmeldung während des Drehs mittels des Videohintergrunds in niedriger Auflösung ermöglicht werden. Insbesondere können auch Hintergrundmotive wie Himmel oder Horizonte zu verschiedenen Tageszeiten nachgebildet werden. Im Gegensatz zur Verwendung von hochpreisigen LCD-Monitoren kann eine erhöhte Skalierbarkeit und einfachere Austauschbarkeit von Lichtquellen bereitgestellt werden. Auch Banding- oder Moire-Effekte sowie Betriebsgeräusche nahe der Aufnahmevorrichtung, wie sie bei der Verwendung von LCD-Monitoren auftreten können, können bei Einsatz der Projektionsfolie und der Lichtquellen vermieden werden. Des Weiteren kann ein zügiger Aufbau des Systems ermöglicht werden.

Das Verfahren kann des Weiteren aufweisen: Bestimmen, mittels einer Datenverarbeitungseinrichtung, von zweiten Videodaten aus den ersten Videodaten mittels Freistellen eines dem Vordergrundobjekt zugeordneten ersten Bildbereichs des Videos von einem der Vorderseite der Projektionsfolie zugeordneten zweiten Bildbereich des Videos. Der zweite Bildbereich kann auch einem Komplement des ersten Bildbereichs zugeordnet sein.

Das Freistellen kann ein Maskieren des ersten Bildbereichs und / oder zweiten Bildbereichs aufweisen.

Der erste Bildbereich kann eine Projektion des Vordergrundobjekts bezüglich der Aufnahmeeinrichtung angeben. Der zweite Bildbereich kann eine Projektion des Videohintergrunds bezüglich der Aufnahmeeinrichtung angeben.

Die Hintergrunddaten können in der Datenverarbeitungseinrichtung bereitgestellt sein. Die Hintergrunddaten können mittels fotogrammetrischer Erfassung von Hintergrundmotiven und / oder einer Hintergrundumgebung generiert werden. Beispielsweise können 3D-Modelle (3D assets) der Hintergrundmotive und / oder der Hintergrundumgebung generiert und / oder bereitgestellt werden. Der Videohintergrund kann CGI-Inhalte (computer generated imagery) aufweisen. Aufgrund der reduzierten zweiten Auflösung und eines entsprechend reduzierten Detailgrads kann das Freistellen vereinfacht werden.

Die Datenverarbeitungseinrichtung kann einen oder mehrere Prozessoren und einen oder mehrere Datenspeicher aufweisen. Die Datenverarbeitungseinrichtung kann außerhalb des Systems bereitgestellt sein. Alternativ kann das System die Datenverarbeitungseinrichtung aufweisen.

Das Verfahren kann des Weiteren aufweisen: Bestimmen von Tiefeninformationen, die einen Abstand zwischen der Aufnahmevorrichtung und dem Vordergrundobjekt angeben, und Bestimmen des ersten Bildbereichs mittels der Tiefeninformationen. Insbesondere können die Tiefeninformationen dem ersten Bildbereich zugeordnet sein.

Der erste Bildbereich kann Bildabschnitte mehrerer Videoframes des Videos aufweisen. Ebenfalls kann der zweite Bildbereich Bildabschnitte mehrerer Videoframes des Videos aufweisen.

Die Tiefeninformationen können beispielsweise mittels Erfassen von räumlichen Koordinaten der Aufnahmevorrichtung und / oder des Vordergrundobjekts bestimmt werden. Hierzu können Sensoren an der Aufnahmevorrichtung und / oder am Vordergrundobjekt vorgesehen sein. Weitere räumliche Koordinaten der Projektionsfolie können gleichfalls erfasst werden.

Ergänzend oder alternativ kann der erste Bildbereich mittels eines Machine-Learning-Algorithmus bestimmt werden, insbesondere etwa mittels eines künstlichen neuronalen Netzes.

Das Verfahren kann ergänzend oder alternativ aufweisen: Bestimmen von Bewegungsinformationen, die eine Relativbewegung des Vordergrundobjektes angeben und Bestimmen des ersten Bildbereichs (des Weiteren) mittels der Bewegungsinformationen. Insbesondere kann eine Relativbewegung des Vordergrundobjektes einer weiteren Relativbewegung des ersten Bildbereichs innerhalb einer Folge von Videoframes des Videos entsprechen.

Die Bewegungsinformationen können auch weitere Bewegungsinformationen der Aufnahmevorrichtung aufweisen. Die Bewegungsinformationen können etwa mittels weiterer Sensoren am Vordergrundobjekt und / oder an der Aufnahmevorrichtung erfasst werden. Die Bewegungsinformationen können auch aus mehreren der Videoframes der ersten Videodaten bestimmt werden.

Die Aufnahmevorrichtung kann eine Kamera sein.

Das Verfahren kann des Weiteren aufweisen: Bestimmen, mittels der Datenverarbeitungseinrichtung, von dritten Videodaten aus den zweiten Videodaten mittels Kombinieren des ersten Bildbereichs mit dem Videohintergrund.

Insbesondere kann der zweite Bildbereich durch den Videohintergrund ersetzt werden. Die zweiten Videodaten können das freigestellte Vordergrundobjekt angeben. Der erste Bildbereich kann mit dem Videohintergrund kombiniert werden, indem der erste Bildbereich vor den Videohintergrund gefügt wird. Das Kombinieren kann für mehrere der Videoframes erfolgen.

Das Verfahren kann des Weiteren ein Anordnen der Lichtquellen in einer Ebene parallel zur Projektionsfolie aufweisen.

Insbesondere kann die Projektionsfolie innerhalb einer (weiteren) Ebene angeordnet sein, beispielsweise in einer vertikalen Ebene, einer horizontalen Ebene oder einer diagonalen Ebene. Die Projektionsfolie kann alternativ gekrümmt bereitgestellt sein. Die Projektionsfolie kann mehrere Teilfolien aufweisen, welche jeweils in verschiedenen Ebenen angeordnet sind. Die Projektionsfolie kann einstückig oder mehrstückig sein. Alternativ kann auch ein Anordnen der Lichtquellen in einer Ebene geneigt oder orthogonal zur Projektionsfolie erfolgen.

Die Projektionsfolie kann eine Rückprojektionsfolie sein. Die Projektionsfolie kann etwa aus PVC hergestellt sein. Die Projektionsfolie kann zumindest teilweise lichtdurchlässig gebildet sein. Es kann vorgesehen sein, dass das Vordergrundobjekt Teil oder alternativ nicht Teil des Systems ist. Das Vordergrundobjekt kann beispielsweise ein Kulissenobjekt sein oder ein Schauspieler.

Das Anordnen der Lichtquellen kann ein Anordnen der Lichtquellen äquidistant bezüglich einer ersten Ebenenrichtung mit einem ersten Abstand und äquidistant bezüglich einer zweiten Ebenenrichtung mit einem zweiten Abstand aufweisen.

Die erste Ebenenrichtung und die zweite Ebenenrichtung können (im Wesentlichen) orthogonal zueinander sein. Die erste Ebenenrichtung und die zweite Ebenenrichtung können auch beispielsweise in einem Winkel zwischen 75° und 85° zueinander angeordnet sein. Insbesondere können die Lichtquellen in einer Gitteranordnung oder Rasteranordnung bereitgestellt sein. Der erste Abstand kann ein horizontaler Abstand und der zweite Abstand ein vertikaler Abstand sein. Der erste Abstand kann zwischen 4 cm und 100 cm, bevorzugt zwischen 5 cm und 20 cm betragen. Der zweite Abstand kann zwischen 2 cm und 100 cm bevorzugt zwischen 3 cm und 50 cm, besonders bevorzugt zwischen 20 cm und 40 cm betragen.

Die Lichtquellen können derart angeordnet sein, dass eine homogene Ausleuchtung an der Projektionsfolie entsteht.

Es können weitere Lichtquellen bereitgestellt sein, wobei die Projektionsfolie nicht zwischen der Aufnahmevorrichtung und den weiteren Lichtquellen angeordnet ist. Die weiteren Lichtquellen können eingerichtet sein, das Vordergrundobjekt und / oder die Vorderseite der Projektionsfolie anzustrahlen.

Das Anordnen der Lichtquellen kann des Weiteren ein Anpassen eines dritten Abstands zwischen der Ebene und der Projektionsfolie aufweisen. Durch Verringerung des dritten Abstands kann etwa die Lichtleistung auf der Projektionsfolie erhöht werden.

Der dritte Abstand kann zwischen 10 cm und 200 cm, bevorzugt zwischen 20 cm und 50 cm betragen.

Das Verfahren kann des Weiteren ein gruppenweises Anordnen der Lichtquellen in mehreren Trägern aufweisen, die vorzugsweise jeweils eine horizontal angeordnete Gruppe von Lichtquellen aufweisen.

Die Träger können aus Aluminium gefertigt sein. Die Träger können eine Balkenform aufweisen. Die Träger können horizontal, vertikal oder diagonal ausgerichtet sein. Es kann vorgesehen sein, dass die Gruppe von Lichtquellen entlang einer Linie angeordnet ist, insbesondere entlang einer Geraden. Es kann auch vorgesehen sein, dass die Gruppe von Lichtquellen entlang einer gekrümmten Kurve angeordnet ist.

Jede der Lichtquellen kann individuell ansteuerbar sein, beispielsweise mittels einer Steuerungsvorrichtung oder mittels der Datenverarbeitungseinrichtung. Mittels der Träger kann die Anzahl der nötigen Einzelvorrichtungen und somit ein Montageaufwand reduziert werden. Des Weiteren kann ein Ausrichten jeder einzelnen Lichtquelle vermieden werden. Zugleich kann eine homogene Ausleuchtung ermöglicht werden.

Die Träger können jeweils eine Länge zwischen 100 cm und 300 cm, bevorzugt zwischen 150 cm und 250 cm aufweisen. Die Träger können jeweils eine Breite zwischen 2 cm und 10 cm, bevorzugt zwischen 3 cm und 5 cm aufweisen. Die Träger können jeweils eine Tiefe zwischen 2 cm und 10 cm, bevorzugt zwischen 3 cm und 5 cm aufweisen.

Das Anordnen der Lichtquellen kann ein Verbinden der mehreren Träger mittels Verbindemitteln derart, dass die mehreren Träger äquidistant zueinander angeordnet sind, aufweisen.

Die mehreren Träger können mittels Schnellverbindern mit den Verbindemitteln verbunden sein. Die Schnellverbinder können beispielsweise als Klickverbinder und / oder Rastverbinder gebildet sein. Auf diese Weise können Träger je nach Beleuchtungssituation flexibel angebracht oder entfernt werden.

Das Verfahren kann des Weiteren ein Bereitstellen der Lichtquellen (und / oder der weiteren Lichtquellen) mit einer roten Leuchtdiode (LED), einer grünen Leuchtdiode, einer blauen Leuchtdiode, einer warmweißen Leuchtdiode und einer kaltweißen Leuchtdiode aufweisen. Insbesondere kann jede der Lichtquellen (und / oder der weiteren Lichtquellen) als eine RGBWW-LED gebildet sein. Mittels RGBWW-LEDs kann eine erhöhte Beleuchtungsstärke ermöglicht werden.

Die warmweiße Leuchtdiode kann beispielsweise eine Farbtemperatur zwischen 2600 und 3300 K, bevorzugt zwischen 2700 K und 2900 K aufweisen. Die kaltweiße Leuchtdiode kann beispielsweise eine Farbtemperatur zwischen 5300 K und 5900 K, bevorzugt zwischen 5600 K und 5800 K aufweisen.

Es kann auch vorgesehen sein, dass von den Lichtquellen (und / oder den weiteren Lichtquellen) mehrere erste Lichtquellen als RGBWW-LED gebildet sind und mehrere zweite Lichtquellen jeweils eine warmweiße Leuchtdiode und / oder eine kaltweiße Leuchtdiode aufweisen. Jede der Lichtquellen kann zwischen 5 mm x 5 mm und 10 mm x 10 mm breit und / oder lang sein.

Die Bildsignale können mehrere Bildpunkte aufweisen, die jeweils einer der Lichtquellen zugeordnet sind. Jeder Bildpunkt kann zwischen einem und fünf Farbwerten aufweisen, insbesondere einen für rot, grün, blau, warmweiß und kaltweiß. Jeder Bildpunkt kann zu der entsprechenden Lichtquelle übertragen werden.

Das Bestimmen der Bildsignale kann aufweisen: Zuordnen von mindestens einem, bevorzugt mehreren der Bildpunkte zu einer Hintergrundposition im Videohintergrund und Bestimmen des mindestens einen Bildpunktes, bevorzugt der mehreren Bildpunkte, durch gewichtete Mittelung von Farbinformationen des Videohintergrundes in Abhängigkeit vom Abstand der Farbinformationen zur Hintergrundposition. Das Bestimmen der Bildsignale kann in der Datenverarbeitungseinrichtung, der Steuerungsvorrichtung oder einer weiteren Datenverarbeitungseinrichtung erfolgen.

Es kann insbesondere vorgesehen sein, dass Bildinformationen des Videohintergrundes mit größerem Abstand zur Hintergrundposition des Bildpunktes eine niedrigere Gewichtung erhalten.

Die Zuordnung der Bildpunkt zu einer Hintergrundposition kann in Abhängigkeit vom ersten Abstand und / oder zweiten Abstand und / oder dritten Abstand erfolgen.

Des Weiteren kann das Bestimmen der Bildsignale ein Unterteilen des Videohintergrunds in mehrere Teilbereiche, die jeweils einem der Bildpunkte zugeordnet sind, und ein Bestimmen von mindestens einem, bevorzugt mehreren der Bildpunkte aus Farbinformationen aus jeweils einem der Teilbereiche aufweisen. Jeder Teilbereich kann um eine entsprechende Hintergrundposition des entsprechenden Bildpunkts im Videohintergrund angeordnet sein.

Die Teilbereiche können miteinander überlappen, aneinander angrenzen und / oder voneinander beabstandet sein. Insbesondere können die Teilbereiche den Videohintergrund lückenlos und überlappungsfrei überdecken. Die Teilbereiche können jeweils einer der Lichtquellen zugeordnet sind. Jeder Bildpunkt kann etwa durch Interpolieren und/oder Mittelung der Bildinformationen des entsprechenden Teilbereichs bestimmt werden.

Es kann vorgesehen sein, dass (äußere) Farbinformationen außerhalb eines der Teilbereiche ein Gewicht von Null für die Bestimmung des zugeordneten Bildpunkts erhalten. Es kann auch vorgesehen sein, dass (innere) Farbinformationen innerhalb des Teilbereichs dasselbe Gewicht für die Bestimmung des zugeordneten Bildpunkts erhalten.

Die Bildsignale können im Verhältnis zu den Hintergrunddaten des Videohintergrunds beispielsweise einen Skalierungsfaktor der Auflösung zwischen 1:5 und 1:100, bevorzugt zwischen 1:8 und 1:12, besonders bevorzugt 1:10 aufweisen. Ein Bildpunkt kann in der besonders bevorzugten Ausführung somit zehn Videohintergrundpunkten entsprechen.

In Verbindung mit dem System zur Verarbeitung von Videodaten können die vorangehend im Zusammenhang mit dem Verfahren zur Verarbeitung von Videodaten beschriebene Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Systems zur Verarbeitung von Videodaten;
- Fig. 2: eine schematische Darstellung eines *Virtual-Production*-Verfahrens zur Verarbeitung von Videodaten gemäß dem Stand der Technik;
- Fig. 3: eine schematische Darstellung eines Green-Screen-Verfahrens zur Verarbeitung von Videodaten gemäß dem Stand der Technik;
- Fig. 4: eine schematische Darstellung eines Verfahrens zur Verarbeitung von Videodaten;
- Fig. 5: eine schematische Darstellung eines Trägers;
- Fig. 6a: eine schematische Darstellung einer Aufbauvorrichtung in einer Seitenansicht;
- Fig. 6b: eine schematische Darstellung der Aufbauvorrichtung in einer Rückansicht;
- Fig. 7a: eine weitere schematische Darstellung der Aufbauvorrichtung in einer Seitenansicht; und
- Fig. 7b: eine weitere schematische Darstellung der Aufbauvorrichtung in einer Rückansicht.

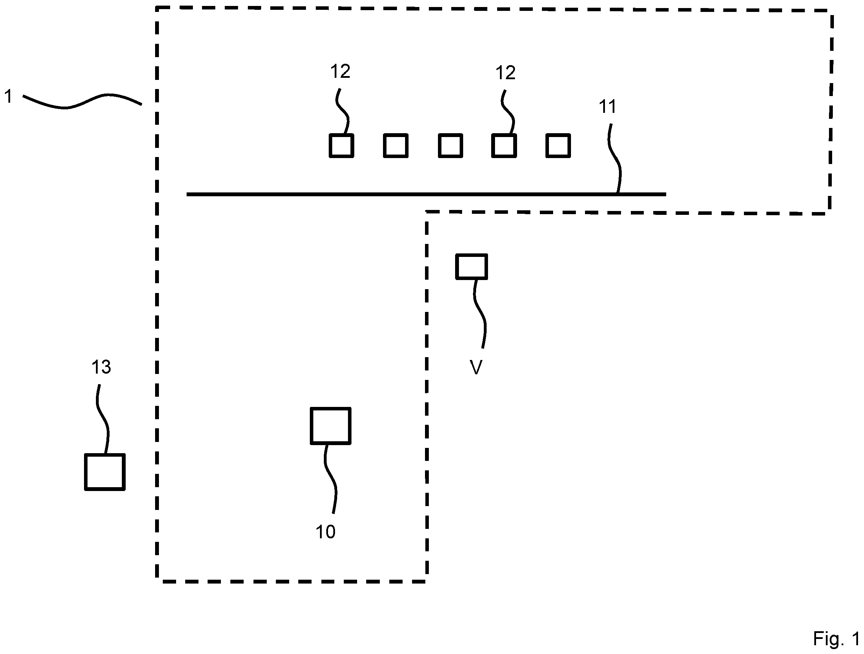

Fig. 1 zeigt eine schematische Darstellung eines Systems zur Verarbeitung von Videodaten. Das System weist eine Aufnahmevorrichtung 10, die eingerichtet ist, Videodaten zu erzeugen, eine Projektionsfolie 11 mit einer der Aufnahmevorrichtung 10 zugewandten Vorderseite und einer von der Aufnahmevorrichtung abgewandten Rückseite und mehrere Lichtquellen 12 auf. Des Weiteren kann eine Datenverarbeitungseinrichtung 13 vorgesehen sein. Mittels der Lichtquellen 12 wird die Rückseite der Projektionsfolie 11 angestrahlt. Mittels der Aufnahmevorrichtung 10 werden erste Videodaten aufgenommen. Die ersten Videodaten geben ein Video der Vorderseite der Projektionsfolie 11 und eines Vordergrundobjekts V an, das zwischen der Projektionsfolie 11 und der Aufnahmevorrichtung 10 angeordnet ist. Das Vordergrundobjekt V kann beispielsweise ein Kulissenobjekt oder ein Schauspieler sein. Die Lichtquellen 12 können mittels der Datenverarbeitungseinrichtung 13 oder mittels einer Steuerungsvorrichtung (nicht dargestellt) gesteuert werden.

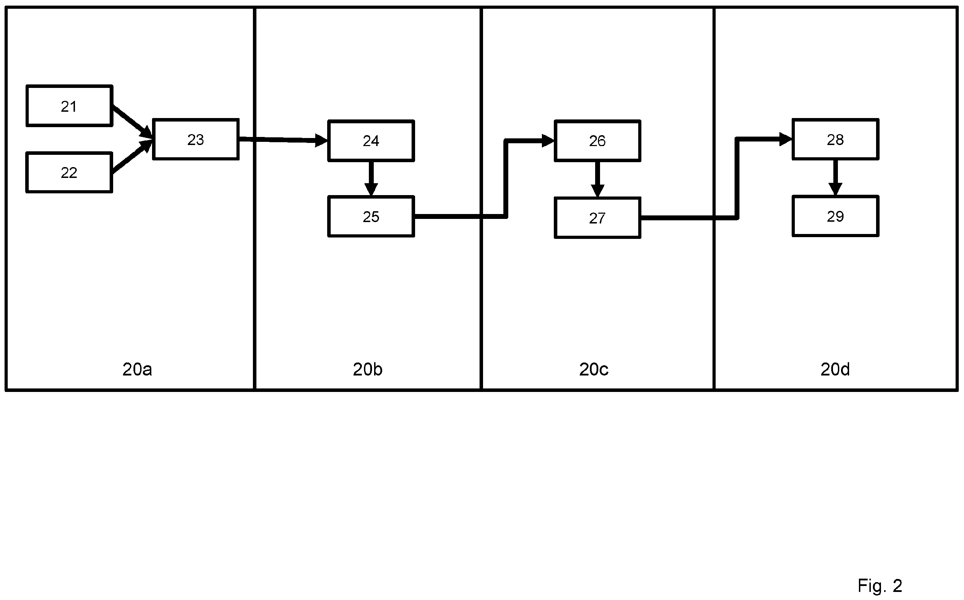

Fig. 2 zeigt eine schematische Darstellung eines *Virtual-Production-*Verfahrens zur Verarbeitung von Videodaten gemäß dem Stand der Technik. Das Verfahren gliedert sich in vier Phasen: Vorproduktion (preproduction) 20a, Dreharbeiten (shooting) 20b, Postproduktion (post production) 20c und Relase-Phase 20d. In der Vorproduktion 20a findet eine fotogrammetrische Erfassung 21 von Hintergrundmotiven und/oder einer Hintergrundumgebung mittels 3D-Modellen statt. Des Weiteren erfolgt eine Bereitstellung 22 von CGI-Inhalten. Anschließend werden die 3D-Modelle und CGI-Inhalte zusammengeführt, 23, und Hintergrunddaten eines hochaufgelösten Videohintergrunds erzeugt.

Die Dreharbeiten 20b umfassen eine Bereitstellung 24 von hochauflösenden LED-Screens, vor denen die Vordergrundobjekte V platziert werden. Eine Filmaufnahme 25 der Vordergrundobjekte V mittels der Aufnahmevorrichtung 10 findet vor den hochauflösenden LED-Screens statt. Lichtreflexionen einer von den LED-Screens erzeugten virtuellen Umgebung auf den Vordergrundobjekten V sind dabei bedingt sichtbar. Lichteffekte und Reflexionen aus dem gewünschten Motiv müssen mit Beleuchtungstechnik teilweise imitiert werden. Zugleich werden Bewegungsdaten der Aufnahmevorrichtung 10 erfasst.

In der Postproduktion 20c erfolgt ein Integrieren 26 der Filmaufnahmen 25 der Vordergrundobjekte V samt Hintergrund mittels der LED-Screens mit den Bewegungsdaten, um resultierende Videodaten hochaufgelöst zu bearbeiten. In der anschließenden Release-Phase 20d findet ein Color-Grading 28 statt, welches Farbkorrekturen beinhaltet, um in einem letzten Schritt 29 fertiggestelltes Filmmaterial zu erhalten.

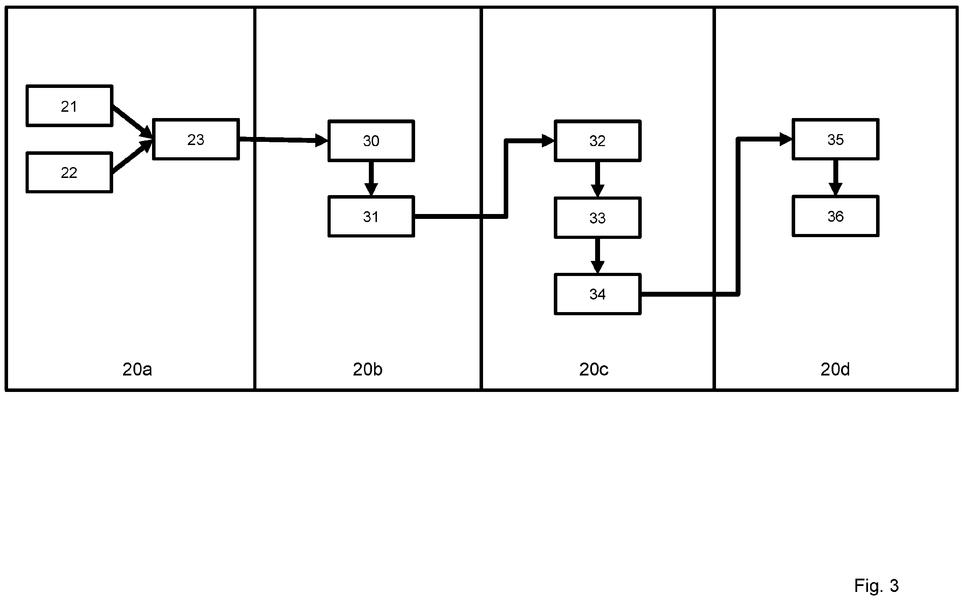

Fig. 3 zeigt eine schematische Darstellung eines Greenscreen-Verfahrens zur Verarbeitung von Videodaten gemäß dem Stand der Technik. Schritte 21, 22, 23 der Vorproduktion 20a entsprechen im Allgemeinen denen des *Virtual-Production-*Verfahrens*.* In den Dreharbeiten 20b erfolgt eine Bereitstellung 30 eines Greenscreens, vor welchem die Vordergrundobjekte V platziert werden. Eine Filmaufnahme 31 der Vordergrundobjekte V mittels der Aufnahmevorrichtung 10 findet vor dem Greenscreen statt. Lichteffekte und Reflexionen aus dem gewünschten Motiv müssen mit herkömmlicher Beleuchtungstechnik nahezu vollständig imitiert werden. Anschließend erfolgt eine Freistellung 32 der Vordergrundobjekte V von Bildbereichen, die dem Greenscreen zugeordnet sind. Des Weiteren findet ein Entfernen 33 von grünen Reflexionen (aus Greenscreen-Licht) auf den Vordergrundobjekten V statt. Gewünschte Lichteffekte und Lichtreflexionen werden virtuell auf die freigestellten Vordergrundobjekte appliziert, 34. Anschließend wird eine Zusammenführung 35 der Vordergrundobjekte V mit den Hintergrunddaten des hochaufgelösten Videohintergrunds durchgeführt, um im letzten Schritt 36 das fertiggestellte Filmmaterial zu erhalten.

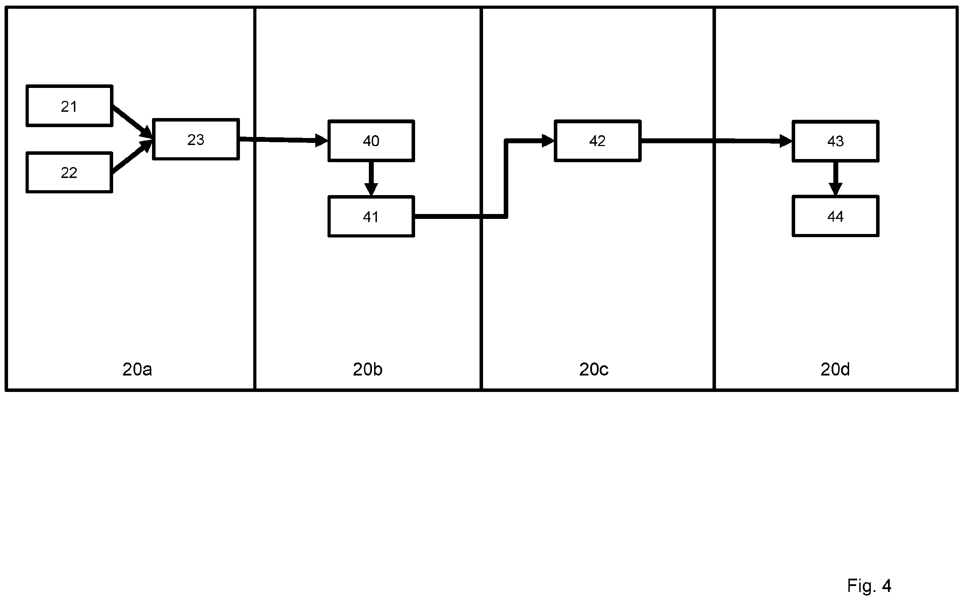

Fig. 4 zeigt eine schematische Darstellung eines Verfahrens zur Verarbeitung von Videodaten. In der Präproduktion 20a findet analog zu bekannten Verfahren die fotogrammetrische Erfassung 21 der Hintergrundmotive und/oder der Hintergrundumgebung mittels 3D-Modellen statt. Des Weiteren erfolgt die Bereitstellung 22 von CGI-Inhalten und die Zusammenführung 23 der 3D-Modelle und CGI-Inhalte samt Erzeugung der Hintergrunddaten des Videohintergrunds mit einer (hohen) ersten Auflösung.

In Schritt 40 erfolgt die Bereitstellung der Aufnahmevorrichtung 10, der Projektionsfolie 11 und der mehreren Lichtquellen 12. Des Weiteren werden aus den Hintergrunddaten Bildsignalen derart bestimmt, dass die Bildsignale den Videohintergrund mit einer zweiten Auflösung angeben, die niedriger als die erste Auflösung ist. Insbesondere weisen die Bildsignale Bildpunkte auf, die jeweils einer der Lichtquellen 12 zugeordnet sind. Um die Bildpunkte zu bestimmen, kann etwa jedem der Bildpunkte jeweils eine Hintergrundposition im Videohintergrund zugeordnet werden. Die Bildpunkte werden anschließend durch gewichtete Mittelung von Farbinformationen des Videohintergrundes in Abhängigkeit vom Abstand der Farbinformationen zur Hintergrundposition bestimmt. Die derart gewonnenen Bildpunktfarbinformationen werden zu den entsprechenden Lichtquellen 12 übertragen, sodass die Lichtquellen 12 die Rückseite der Projektionsfolie 11 bestrahlen. Die Projektionsfolie 11 ist zumindest teilweise lichtdurchlässig und bildet auf der Vorderseite gestreutes Licht ab.

Auf diese Weise werden in Schritt 41 ersten Videodaten mit einem Video der Vordergrundobjekte V vor der Projektionsfolie 11 samt Videohintergrund in der niedrigeren zweiten Auflösung aufgenommen. Insbesondere sind Lichtreflexionen der virtuellen Umgebung auf den Vordergrundobjekten V bereits in hinreichendem Detail sichtbar. Zugleich werden Bewegungsinformationen (Track-Informationen) der Aufnahmevorrichtung 10 und / oder der Vordergrundobjekte V sowie Tiefeninformationen, die einen Abstand zwischen der Aufnahmevorrichtung 10 und dem Vordergrundobjekt V angeben, mittels Sensoren erfasst.

Im folgenden Schritt 42 werden, etwa mittels der Datenverarbeitungseinrichtung 13, zweite Videodaten aus den ersten Videodaten mittels Freistellen der den Vordergrundobjekt V zugeordneten ersten Bildbereiche des Videos von zweiten Bildbereichen des Videos bestimmt, die der Vorderseite der Projektionsfolie 11 zugeordnet sind. Die ersten Bildbereiche und / oder die zweiten Bildbereiche können etwa mittels der Tiefeninformationen und / oder mittels der Bewegungsinformationen bestimmt werden. In den zweiten Videodaten sind bereits die Lichtreflexionen der virtuellen Umgebung enthalten und müssen nicht gesondert im Rahmen der Postproduktion erzeugt werden.

In Schritt 43 werden dritte Videodaten aus den zweiten Videodaten erzeugt, indem die freigestellten ersten Bildbereiche mit dem Videohintergrund in der hohen ersten Auflösung kombiniert werden, um im letzten Schritt 44 das fertiggestellte Filmmaterial zu erhalten.

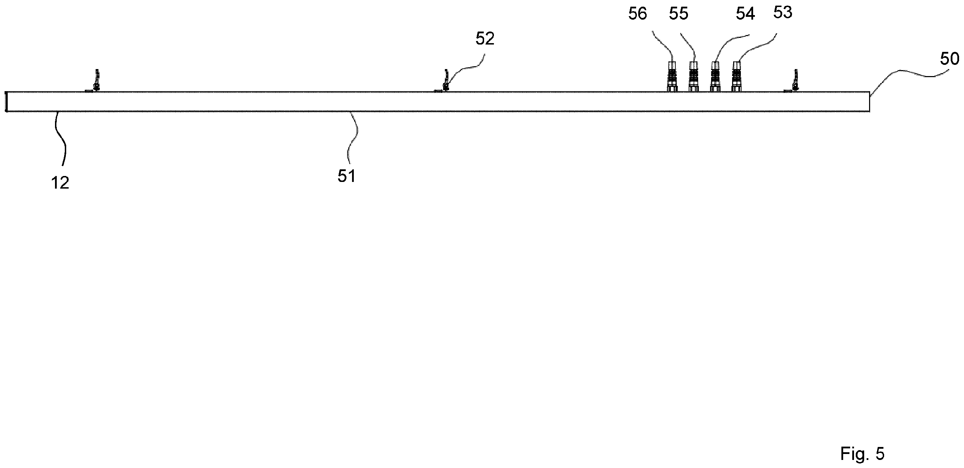

Fig. 5 zeigt eine schematische Darstellung eines Trägers (Lichtleiste) 50 in einer Draufsicht. Der Träger 50 kann an einer Lichtabstrahlseite 51 eine Gruppe von voneinander beabstandeten Lichtquellen 12 aufweisen, zum Beispiel mit einem ersten Abstand von 5 cm. Die Lichtquellen 12 der Gruppe können zueinander (in einer Linie) horizontal ausgerichtet sein. Jede der Lichtquellen 12 weist dabei jeweils eine rote, eine grüne, eine blaue, eine warmweiße und eine kaltweiße LED auf. Jede der Lichtquellen stellt somit eine RGBWW-LED dar. Herkömmliche RGB-LEDs weisen für rot, grün und blau lediglich schmale Wellenlängenbänder auf. Demgegenüber ist für die warmweiße LED und die kaltweiße LED jeweils ein verbreitertes Spektrum vorgesehen, etwa mittels Beschichtung mit fluoreszierendem Phosphor.

Mehrere Träger 50 können vertikal übereinander angeordnet sein, etwa jeweils mit einem zweiten Abstand zueinander von 30 cm.

Durch die Verwendung von RGBWW-LEDs und der Möglichkeit, diese in Gruppen individuell zu steuern, lassen sich nicht nur monochrome Hintergründe, sondern auch feine Farbverläufe realisieren. Dies bietet die Möglichkeit, etwa Himmel- und Horizontsituationen zu simulieren und flexibel anzupassen.

Der Träger 50 ist aus Aluminium gefertigt und weist mechanische Befestigungsanschlüsse 52, eine Stromeingangsanschluss 53 (für 110 V bis 230 V AC), einen Stromweiterleitungsanschluss 54, einen Dateneingangsanschluss 55 und einen Datenweiterleitungsanschluss 56 auf. Der Träger kann beispielsweise eine Länge von 200 cm aufweisen. Jede der Lichtquellen 12 kann über den Dateneingangsanschluss 55 individuell und mit fünf Kanälen (je einer für rot, grün, blau, warmweiß und kaltweiß) angesteuert werden.

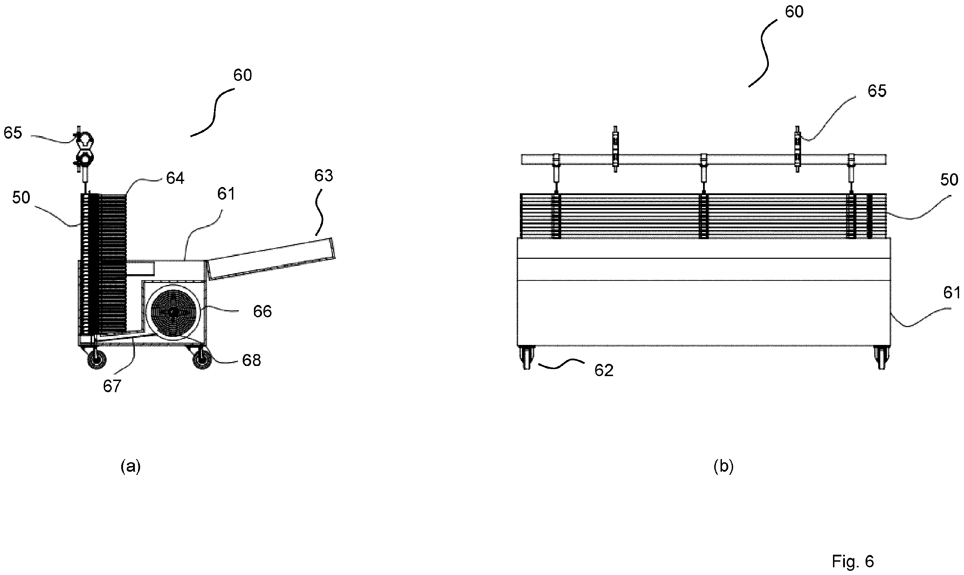

Fig. 6a zeigt eine schematische Darstellung einer Aufbauvorrichtung 60 in einer Seitenansicht und Fig. 6b zeigt eine schematische Darstellung der Aufbauvorrichtung 60 in einer Rückansicht. Die Aufbauvorrichtung 60 kann eine Aufbewahrungsvorrichtung 61, beispielsweise ein Flightcase, aufweisen. Die mehreren Träger 50 können vor Aufbau in der Aufbewahrungsvorrichtung 61 angeordnet sein. Die Aufbewahrungsvorrichtung 61 kann einen Schutz der Träger 50 und der Lichtquellen 12 vor mechanischer Beschädigung ermöglichen. Die Aufbewahrungsvorrichtung 61 kann Rollen 62 aufweisen, sodass ein Bewegen der Aufbewahrungsvorrichtung 61 ohne Hilfsmittel ermöglicht ist. Die Aufbewahrungsvorrichtung 61 kann einen Formfaktor aufweisen, der auf logistisch übliche Maße ausgelegt ist. Die Aufbewahrungsvorrichtung 61 kann eingerichtet sein, stapelbar angeordnet zu werden. Die Aufbewahrungsvorrichtung 61 kann einen aufklappbaren Deckel 63 aufweisen. Die Träger können miteinander mittels eines Verbindemittels 64, etwa eines Gurtbands oder Gewebebands, verbunden sein. Es kann ein Anschlagmittel 65 vorgesehen sein, dass eingerichtet ist, die mehreren Träger mit einem motorisierten Traversensystem herzustellen. Die Aufbauvorrichtung kann des Weiteren eine Spule 66 (etwa eine Drahseilspule) mit einem Führungsmittel 67, etwa einem Drahtseil, sowie eine Triebfeder 68 aufweisen.

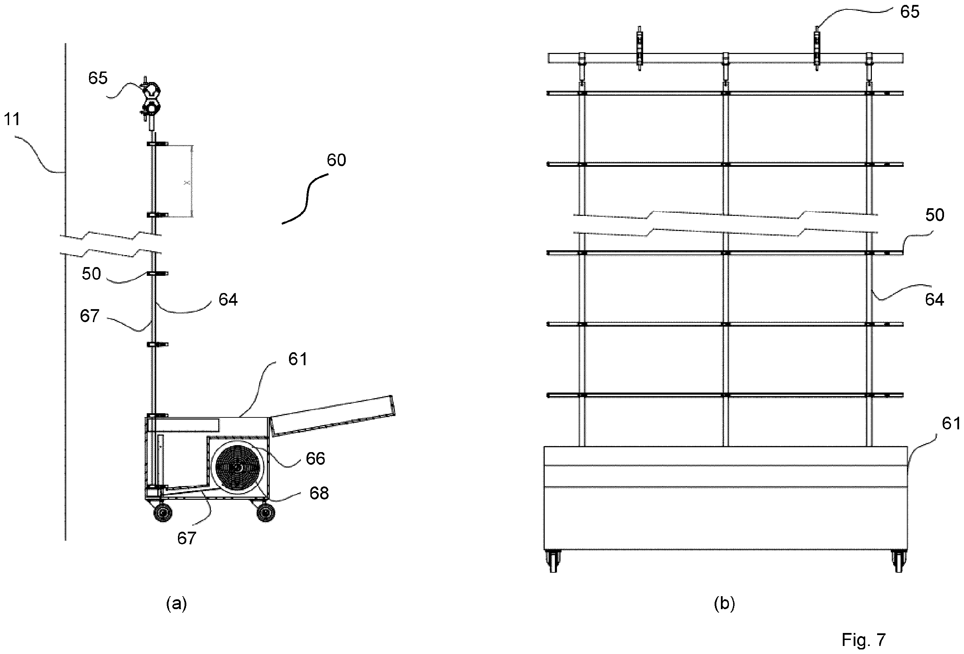

Fig. 7a zeigt eine weitere schematische Darstellung der Aufbauvorrichtung 60 in einer Seitenansicht und Fig. 7b zeigt eine weitere schematische Darstellung der Aufbauvorrichtung 60 in einer Rückansicht.

Nach Öffnen der Aufbewahrungsvorrichtung 61 wird mit dem Anschlagmittel 64 eine sichere Verbindung mit dem motorisiertem Traversensystem hergestellt. Beim Hochziehen des Traversensystems wird das Führungsmittel 67 aus der Spule 66 abgewickelt, und durch die Triebfeder 68 konstant unter Spannung gehalten. Das Führungsmittel 67 wird derart mit den Trägern 50 verbunden, dass diese in einer Ebene angeordnet verbleiben können. Die Träger 50 können untereinander fest mittels des Verbindemittels 64 verbunden sein, beispielsweise an den Befestigungsanschlüssen 52. Die Träger 50 können bei Bedarf einfach abnehmbar und wiederbefestigbar sein. Mittels des Verbindemittels 64 werden die Träger 50 im zweiten Abstand zueinander gehalten. Auf diese Weise kann eine homogene Ausleuchtung zu gewährleistet werden. Bei Bedarf kann die Lichtleistung durch Verringerung des zweiten Abstands und eines dritten Abstands zwischen der Projektionsfolie 11 und den Trägern 50 erhöht werden. Mittels der Aufbauvorrichtung 61 kann nötiger Arbeitsaufwand begrenzt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zur Verarbeitung von Videodaten mittels eines Systems (1), aufweisend:
- eine Aufnahmevorrichtung (10), die eingerichtet ist, Videodaten zu erzeugen;
- eine Projektionsfolie (11) mit einer der Aufnahmevorrichtung (10) zugewandten Vorderseite und einer von der Aufnahmevorrichtung (10) abgewandten Rückseite und
- mehrere Lichtquellen (12);
wobei das Verfahren aufweist:
- Bereitstellen von Hintergrunddaten, welche einen Videohintergrund mit einer ersten Auflösung angeben, und Bestimmen von Bildsignalen aus den Hintergrunddaten derart, dass die Bildsignale den Videohintergrund mit einer zweiten Auflösung angeben, die niedriger als die erste Auflösung ist;
- Übertragen der Bildsignale zu den Lichtquellen (12) und Bestrahlen der Rückseite der Projektionsfolie (11) mittels der Lichtquellen (12); und
- Aufnahme von ersten Videodaten mittels der Aufnahmevorrichtung (10), die ein Video der Vorderseite der Projektionsfolie (11) und eines Vordergrundobjekts (V) angeben, das zwischen der Projektionsfolie (11) und der Aufnahmevorrichtung (10) angeordnet ist.

2. Verfahren nach Anspruch 1, des Weiteren aufweisend:
- Bestimmen, mittels einer Datenverarbeitungseinrichtung (13), von zweiten Videodaten aus den ersten Videodaten mittels Freistellen eines dem Vordergrundobjekt (V) zugeordneten ersten Bildbereichs des Videos von einem der Vorderseite der Projektionsfolie (11) zugeordneten zweiten Bildbereich des Videos.

3. Verfahren nach Anspruch 2, des Weiteren aufweisend:
- Bestimmen von Tiefeninformationen, die einen Abstand zwischen der Aufnahmevorrichtung (10) und dem Vordergrundobjekt (V) angeben, und
- Bestimmen des ersten Bildbereichs mittels der Tiefeninformationen.

4. Verfahren nach Anspruch 2 oder 3, des Weiteren aufweisend:
- Bestimmen von Bewegungsinformationen, die eine Relativbewegung des Vordergrundobjektes (V) angeben und
- Bestimmen des ersten Bildbereichs mittels der Bewegungsinformationen.

5. Verfahren nach einem der Ansprüche 2 bis 4, des Weiteren aufweisend:
- Bestimmen, mittels der Datenverarbeitungseinrichtung (13), von dritten Videodaten aus den zweiten Videodaten mittels Kombinieren des ersten Bildbereichs mit dem Videohintergrund.

6. Verfahren nach einem der vorangehenden Ansprüche, des Weiteren aufweisend:
- Anordnen der Lichtquellen (12) in einer Ebene parallel zur Projektionsfolie (11).

7. Verfahren nach Anspruch 6, wobei das Anordnen der Lichtquellen (12) aufweist:
- Anordnen der Lichtquellen (12) äquidistant bezüglich einer ersten Ebenenrichtung mit einem ersten Abstand und äquidistant bezüglich einer zweiten Ebenenrichtung mit einem zweiten Abstand.

8. Verfahren nach Anspruch 6 oder 7, wobei das Anordnen der Lichtquellen (12) ein Anpassen eines dritten Abstands zwischen der Ebene und der Projektionsfolie (11) aufweist.

9. Verfahren nach einem der vorangehenden Ansprüche, des Weiteren aufweisend:
- gruppenweises Anordnen der Lichtquellen (12) in mehreren Trägern (50), die jeweils eine horizontal ausgerichtete Gruppe von Lichtquellen (12) aufweisen.

10. Verfahren nach Anspruch 9, wobei das Anordnen der Lichtquellen aufweist:
- Verbinden der mehreren Träger (50) mittels Verbindemitteln (64) derart, dass die mehreren Träger (50) äquidistant zueinander angeordnet sind.

11. Verfahren nach einem der vorangehenden Ansprüche, des Weiteren aufweisend:
- Bereitstellen der Lichtquellen (12) mit einer roten Leuchtdiode, einer grünen Leuchtdiode, einer blauen Leuchtdiode, einer warmweißen Leuchtdiode und einer kaltweißen Leuchtdiode.

12. Verfahren nach einem der vorangehenden Ansprüche, wobei die Bildsignale mehrere Bildpunkte aufweisen, die jeweils einer der Lichtquellen (12) zugeordnet sind.

13. Verfahren nach Anspruch 12, wobei das Bestimmen der Bildsignale aufweist:
- Zuordnen von mindestens einem der Bildpunkte zu einer Hintergrundposition im Videohintergrund und
- Bestimmen des mindestens einen Bildpunktes durch gewichtete Mittelung von Farbinformationen des Videohintergrundes in Abhängigkeit vom Abstand der Farbinformationen zur Hintergrundposition.

14. Verfahren nach Anspruch 12 oder 13, wobei das Bestimmen der Bildsignale aufweist:
- Unterteilen des Videohintergrunds in mehrere Teilbereiche, die jeweils einem der Bildpunkte zugeordnet sind, und
- Bestimmen von mindestens einem der Bildpunkte aus Farbinformationen aus jeweils einem der Teilbereiche.

15. System (1) zur Verarbeitung von Videodaten, aufweisend:
- eine Aufnahmevorrichtung (10), die eingerichtet ist, Videodaten zu erzeugen;
- eine Projektionsfolie (11) mit einer der Aufnahmevorrichtung (10) zugewandten Vorderseite und einer von der Aufnahmevorrichtung (10) abgewandten Rückseite und
- mehrere Lichtquellen (12),
wobei das System (1) eingerichtet ist, das Verfahren nach einem der vorangehenden Ansprüche auszuführen.
